# EUROPÄISCHE PATENTSCHRIFT

(11) **EP 0 782 699 B1**
(45) Veröffentlichungstag und Bekanntmachung des Hinweises auf die Patenterteilung: **04.08.1999**
(21) Anmeldenummer: 95930381.9
(22) Anmeldetag: 07.09.1995
(51) Int. Cl.: G01G 23/37, G01G 23/01, G01D 3/08

(54) **Eichfähige Datenverwaltung**
Data management capable of calibration
Système de gestion de données étalonnable

(30) Priorität: 23.09.1994 DE 4433913; 23.09.1994 DE 9415398 U; 17.03.1995 DE 19509775
(43) Veröffentlichungstag der Anmeldung: 09.07.1997
(73) Patentinhaber: CSB-System Software-Entwicklung & Unternehmensberatung GmbH, D-52511 Geilenkirchen (DE)
(72) Erfinder: SCHIMITZEK, Peter, D-52511 Geilenkirchen (DE)
(74) Vertreter: Haussingen, Peter
(86) Internationale Anmeldenummer: DE9501235
(87) Internationale Veröffentlichungsnummer: WO9609523

(56) Entgegenhaltungen:
- EP-A- 0 231 438
- EP-A- 0 274 045
- EP-A- 0 510 312
- DE-A- 3 200 872

## Beschreibung

Die Erfindung betrifft ein Verfahren und eine Vorrichtung für ein eichfähiges Erfassen und Speichern von ermittelten Meßwertdaten, indem das Erfassen und Speichern darin besteht, daß sie von einem eichfähigen oder nicht eichfähigen Meßgerät durch ein eichfähiges Speichermedium übernommen werden und gleichzeitig mit der Übernahme das eichfähige Speichermedium eine Erfassung, eine Kennzeichnung, eine Anzeige und eine Sicherung der Meßdaten vornimmt und die Archivierung der Meßdaten bei sich selbst vornimmt und daß sie abrufbar anliegen.

Anerkannte eichfähige Meßgeräte, die der Bauartzulassung entsprechen sind u. a. bei Waagen bekannt. Die Eichvoraussetzung erfolgt hier durch die menschliche visuelle Kontrolle oder durch den "Alibi"-Drucker, der direkt an der Waage angeordnet ist. Mit diesem Drucker werden die Meßdaten, wie die fortlaufende Nummer der Meßwertdaten und eventuell der Zeitpunkt des Messung ausgewiesen. Hier ist keine Nachvollziehbarkeit und keine Referenz gegeben, insbesondere, wenn Meßwertdaten von mehreren Waagen aufbewahrt werden müssen, auch eine manipulationssichere Archivierung ist mit den über den "Alibi"-Drucker ausgewiesenen Meßwertdaten nicht gegeben.

Um diese Nachteile zu beseitigen, insbesondere eichfähige Meßwertdaten von mehreren Meßgeräten zu erfassen, life darzustellen und zu hinterlegen sind mehrere Lösungen bekannt.

Nach der GB-A-2167561 werden Meßwertdaten von mehreren Waagen erfaßt, umgewandelt, am Bildschirm abrufbar dargestellt und im Rechner abgelegt. Somit wird die "Intelligenz" der Waage in den Personencomputer verlegt.

Der einzige Vorteil ist, daß die Meßwertdaten life einzeln und nacheinander von mehreren Waagen am Bildschirm angezeigt werden und durch die Speicherung wieder abrufbar sind, wobei durch die Integration eines "Alibi"-Druckers die gleichen Prüfberichte ausgewiesen werden, wie sie bei den eichfähigen Waagen mit dem "Alibi"-Drucker vorliegen.

Weiterhin ist nach der EP-A-0510312 eine Vorrichtung bekannt, nach der Waagen an einer mindestens einem Personalcomputer aufweisenden zentralen Station angeschlossen sind, wobei die Waagen Hardware aufweisen, die die Wägedaten in digitaler Form mit einem entsprechenden Protokoll versehen dem zentralen Personalcomputer zur Verfügung stellen. Die ermittelten Meßwerte der einzelnen Waagen können wahlweise einzeln oder gemeinsam am Bildschirm dargestellt werden. Auch mit dieser Lösung werden mittels Auswertungsgeräten Meßwertdaten in bekannter Weise gespeichert oder weiter verarbeitet bzw. ausgedruckt, die nicht als eichfähig anerkannt werden.

So ist die Lösung mit den Nachteilen behaftet,
- daß ein Zugriff auf den Speicher der PC's nicht ausgeschlossen ist,
- daß keine unterbrechungsfreie Meßwertverarbeitung gegeben ist,
- daß der Datensatz keine Referenznummer und keine Prüfzahl aufweist,
- daß kein eichpflichtiger Datenpfad vorhanden ist,
- daß ein Zugriff auf Betriebssystemebene nicht ausgeschlossen ist, der Zugriff zur Betriebssystemebene ist nicht versperrt (Single und Multi-Tasking-Betriebssystem).

Der Erfindung liegt die Aufgabe zugrunde, ein Verfahren und eine Vorrichtung für ein eichfähiges Erfassen und Speichern von ermittelten Meßwertdaten zu entwickeln, mit denen die Eichüberwachung ohne menschliches Zutun abgesichert wird und mit denen amtlich anerkannte eichfähige Meßwertdaten nachgewiesen werden können.

Weiterhin sind diese ermittelten Meßwertdaten manipulationssicher und unlöschbar als eichfähige Meßwertdaten zu hinterlegen, sie sollen wieder abrufbar zur Verfügung stehen und auf einem Bild sichtbar dargestellt werden.

Erfindungsgemäß wird die Aufgabe nach dem Patentanspruch 1 oder dem Patentanspruch 6 gelöst.

Bevorzugte Weiterbildungen der Erfindung ergeben sich aus den abhängigen Ansprüchen.

Die Vorteile der Erfindung bestehen darin,
daß der Datensatz neben den Meßwerten aus der Referenznummer mit geheimen Polynomen, einer fortlaufenden Nummer, die die eindeutige Zuordnung für die Zeit des Betriebes im eichpflichtigen Verkehr sicherstellt (Jahr, Wochentag, Waagennummer etc.) und aus der Prüfzahl besteht,
daß die Meßwertverarbeitung unterbrechungsfrei ist,
daß eine manipulationssichere Archivierung der Meßdaten gegeben ist,
daß der Zugriff auf den Speicher versperrt ist,
daß ein Zugriff zur DOS-Ebene ausgeschlossen wird,
daß die Meßwertdaten nicht verfälschbar und nicht löschbar sind,
daß mittels Kreuzverbund eichpflichtige und nicht eichpflichtige Meßwertdaten eines Meßwertdatenermittlungsgerätes von einem Rechner-Arbeitsplatz auf einen anderen übertragbar sind,
daß Meßwertdaten in Echtzeit der EDV-Verarbeitung zugeführt und verarbeitet werden,
daß ein größerer Meßwertdatendurchsatz, insbesondere bei Durchlaufwägungen (Wägungen bei durchlaufendem Transportband) erstmals ohne Fehlerquellen möglich ist,
daß die Meßwertdaten online in einem separaten Fenster auf einem Bildschirm als Zusatzanzeige bzw. als Hauptanzeige für zusätzliche Meßgeräte angezeigt werden.

Die Erfindung wird nachstehend an Hand von
Figur 1 als Vorrichtung zur eichfähigen Datenverwaltung und
Figur 2 als Arbeitsplatz-Kombination
beschrieben.

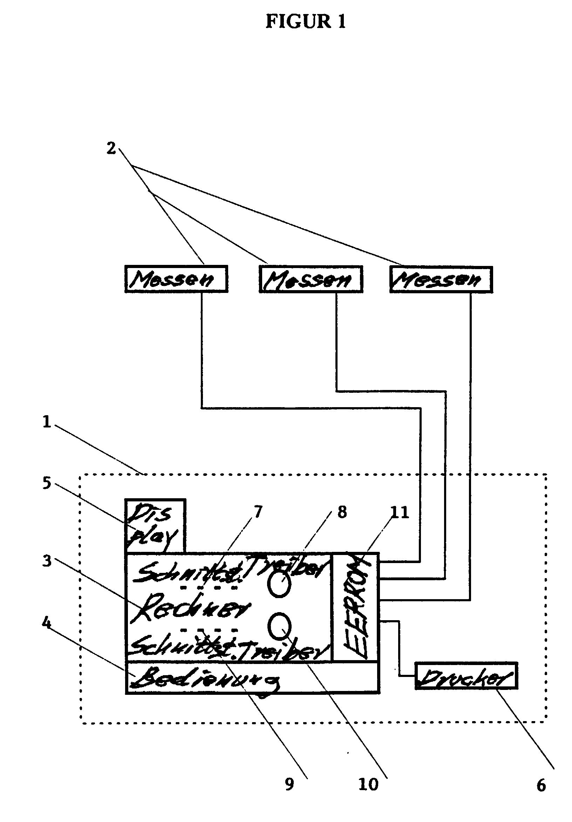

Nach Figur 1 wird das Verfahren und die Vorrichtung für ein eichfähiges Erfassen und Speichern von ermittelten eichpflichtigen und nicht eichpflichtigen Meßwertdaten anhand einer anerkannten eichfähigen Einrichtung 1, die an eichfähigen und/oder nicht eichfähigen Meßwertdatenermittlungseinrichtungen 2, mindestens jedoch an eine eichfähige oder nicht eichfähige Meßwertdatenermittlungseinrichtung 2 angeschlossen ist, dargestellt, indem die anerkannte eichfähige Einrichtung 1 mindestens aus einem Rechner 3 mit einer Speichereinheit, aus einer Bedienungseinheit 4, aus einem Bildschirm 5 und aus einem Drucker 6 besteht, wobei der Rechner 3 u. a. zwei serielle Schnittstellen, die Schnittstelle I 7 für einen Treiber I 8 und die Schnittstelle II 9 für einen Treiber II 10 und eine EEPROM-Karte 11 besitzt. Die EEPROM-Karte 11 ist eine Erweiterungskarte, die einen nichtflüchtigen Speicher zur Verfügung stellt, wobei der Speicher individuell bestückt werden kann und genutzt verwendet wird.

Der Treiber II 10 als Device-Treiber E01EP stellt die verfügbare Kapazität automatisch fest.

Ein Flash-EEPROM ist vergleichbar mit einem EPROM. Es kann mit normalen Memory-Zyklen ausgelesen werden. Das Speichern von Daten geschieht jedoch nur mit speziellen Programmieralgorithmen. Im Vergleich zu EPROM's geschieht das Löschen grundsätzlich auch nur bausteinweise mit Hilfe eines eigenen Lösch-Algorithmuses. Dadurch ist es möglich, Flash-Speicher im eingesetzten Zustand zu Beschreiben und zu Löschen ohne das hierfür ein spezielles Programmier- oder Löschgerät, wie bei EPROM's, notwendig wird. Gleichzeitig ist hiermit auch ein unbeabsichtigtes Löschen nicht mehr möglich.

Die EEPROM-Karte 11 ist mit einer PAGING-Hardware versehen. Der eigens entwikkelte Flash-Treiber als Treiber II 10 ist die Schnittstelle eines eigens entwickelten Treibers unter IO-SYS, wie z. B. alle Waagentreiber. Es ist ein ,,eichpflichtiges Programm" und trägt in seinem Namen deshalb den Anhang ,,EP" (z. B. Flash-Treiber E01EP).

Der Treiber I 8 wird ebenfalls als "eichpflichtiges Programm" mit einem "EP" am Ende des Namens gekennzeichnet.

Beispielsweise heißt der neue Treiber I 8 für Waage "X" nun W08EP.EXE.

Die EEPROM-Karte 11 kann für den Betrieb mit diesem Treiber II 10 bei der Produktion mit einer internen Serien-Nummer vorprogrammiert werden.

Funktionsaufrufe sind wie folgt:

Der Treiber II 10 kann sowohl von einem eigens entwickelten Flash-Sicherungsprogramm (EP-Programm), das die Sicherung der eichpflichtigen Daten aus dem Flash-Speicher auf eine Speichereinheit übernimmt, als auch von den Treiber I 8 aufgerufen werden.

Für die Flash-Speicher-Verwaltung sind folgende OP-Codes implementiert: (Erweiterung nach Bedarf möglich)

| OP-Code | Funktion | Kommentar | Aufruf möglich von | |
|---|---|---|---|---|
| | | | Waagentreibern | Flashsicherung |
| 00 | OPEN | mit Statusermittlung | X | X |
| 01 | READ | lese Satz Nr. xxxx | -- | X |
| 11 | CHECK | nur Statusermittlung | X | X ¹⁾ |
| 15 | CHECK | prüfe nachträglich CRC im übergebenen Datensatz | -- | X |
| 02 | WRITE | lege Waagendatensatz ab | X | -- |
| 28 | WRITE | lösche den gesamten Speicher | -- | X |
| 03 | CLOSE | Treiber schließen | X | X |
| 04 | ABORT | letzten Auftrag abbrechen | -- | X |

| | | | | |
|---|---|---|---|---|
| ¹⁾ Gleiche Funktion wie automatisch beim OPEN. | | | | |

Der Ablauf bei der Gewichtskontrolle mit Hilfe des Treibers I 8 ist wie folgt:

Nachdem der Treiber I 8 das Gewichtsanforderungskommando von dem Applikationsprogramm erhalten hat, sendet dieser ein Anforderungskommando an die eichfähige und/oder nicht eichfähige Meßwertdatenermittlungseinrichtung 2 und wartet auf den Datensatz. Dieser Vorgang ist nur über die Information der Schnittstellenbeschreibung zu den Treibern I 8; II 10 möglich.

Nach Empfang des letzten Bytes des Gewichtsstrings der eichfähigen und/oder nicht eichfähigen Meßwertdatenermittlungseinrichtung 2 wird der Datensatz auf Gültigkeit (Empfangs- oder logische Fehler) überprüft. Im Fehlerfalle wird dem anfordernden Applikationsprogramm nur der Fehlercode zurückgegeben und dieser Vorgang ist damit beendet.

Die Programme der Applikation werden in dieser Lösung von der selben Station (EEPROM-Karte) gestartet, wobei die Programme nicht unbedingt an der selben Station gespeichert sind. Üblicherweise befinden sich diese Applikationsprogramme auf der selben Station oder sind mit der Speichereinheit verbunden (z. B. im Netzwerk, Laufwerk, Festplatte, Diskette).

Die Aufgaben können fernbedient, ferngesteuert und ausgelöst werden.

Andernfalls erstellt der Treiber I 8 aus den empfangenden Daten den relevanten eigens entwickelten Standard-Gewichtsdatensatz und fügt den Daten noch die eigene Treiber-Kanal-Nummer sowie den eigenen Treibernamen hinzu. Das ist die Bezeichnung der Softwareschnittstelle zu den Meßgeräten.

Im Anschluß wird der Treiber II 10 mit dem OP-Code WRITE vom jeweiligen Treiber I 8 aufgerufen, um den relevanten Datensatz manipulationssicher in den Flash-Speicher zu programmieren.

Der Treiber II 10 fügt dem relevanten Datensatz nun noch die Karten-Serien-Nummer, die nächste laufende Satznummer sowie die aktuelle Uhrzeit und das Datum hinzu, bevor er über den gesamten Satz das CRC gemäß einem geheimen Polynom bildet.

Anschließend wird dieser gesicherte String netzausfallsicher in den Flash-EEPROM-Speicher programmiert und der neue Flash-Status ermittelt.

Dieser eigens entwickelte Standard-Gewichtsdatensatz wird nun zusammen mit dem aktuellen Flash-Status dem Treiber I 8 zurückgegeben.

Der hierdurch wiederaktivierte Treiber I 8 prüft nun den Return-Code (OK, bzw. Fehlercode) des E01EP und im Falle einer positiven Rückmeldung wird nun erst der Gewichtsdatensatz zuzüglich des aktuellen Flash-Status zurückgemeldet.

Der Treiber I 8 bleibt nun wiederum solange inaktiv, bis die Applikation einen neuen Auftrag an ihn übergibt. Die Sicherung wird durch Übertrag der eichfähigen Daten von der EEPROM-Karte 11 auf die Speichereinheit des Rechners 3 vorgenommen.

Die EEPROM-Karten 11 werden bei der Herstellung mit einer laufenden Seriennummer versehen. Diese Serien-Nr. (2 Bytes) wird mit einem 16-Bit-Statuswort aus Sicherheitsgründen in jeden bestückten Flash-Baustein einprogrammiert.

Aus diesem Grund müssen für einen abgesicherten Betrieb dieses Treibers II 10 mindestens zwei Flash-Bausteine eingesetzt sein, andernfalls wird dieser Fehler gemeldet und der weitere Betrieb unterbunden.

Nachdem das eigens entwickelte Flash-Sicherungsprogramm den Lösch-Befehl abgesetzt hat, führt dieser Treiber II 10 folgende Sequenzen aus:
1. Ändern des 16 Bit Status im letzten Baustein in "Löschung 1 gestartet".
2. Löschung des gesamten Inhalts des ersten Flash-Bausteins (dabei auch die dort abgelegte Serien-Nummer verloren)
3. Neuprogrammierung der Serien-Nummer an den Anfang des ersten Bausteins nach erfolgreicher Löschung mit Status "Serien-Nummer OK"
4. Einzelnes Löschen aller folgenden Bausteine mit anschließender Neuprogrammierung der Serien-Nummer sowie dem Status "Serien-Nummer OK-Status".
5. Nach erfolgreicher Löschung des letzten Bausteins erhält auch dieser wieder die Serien-Nummer und den gleichen Status.
6. Zum Abschluß werden noch einmal alle Bausteine auf die gleiche Serien-Nummer und den OK-Status hin überprüft, bevor der E01EP-Treiber die gesamt ermittelte Flash-Kapazität dem aufrufenden Programm meldet und damit zur Verfügung steht.

Diese recht umständliche Sequenz wurde realisiert, da während dieser Zeit ein Spannungsausfall oder ein versehentliches Abschalten der Rechners nicht ausgeschlossen werden kann, könnte die Serien-Nummer der Karte 11 verloren gehen, bevor sie wieder neu programmiert wurde.

Für diesen Fall eines vorzeitigen Abbruchs des Löschvorganges wird beim nächsten OPEN dem Sicherungsprogramm dieser Fehlerstatus gemeldet, das daraufhin einen neuen Lösch-Befehl absetzt, den der Treiber II 10 nun zu Ende führen kann.

Die Funktion des eigens entwickelten Flash-Sicherungsprogrammes ist dadurch charakterisiert, daß bei jeden Booten des Rechners das eigens entwickelte Sicherungsprogramm automatisch gestartet wird.

Die Meldung: "Zum Prüfen der eichpflichtigen Daten bitte (F10) drücken" auf dem EDV-Bildschirm erscheint für ca. 10 Sekunden.

Wurde die Funktionstaste F 10 betätigt, erscheint eine Liste 1, mit der die Dateien der einzelnen Meßtage angezeigt werden.

| Liste 1: (Beispiel) | | | |
|---|---|---|---|
| Anzeige der eichpflichtigen Daten | | | |
| Name | Größe | Datum | Zeit |
| 940601.WDT | 24304 | 01.06.94 | 12:13 |
| 940602.WDT | 76260 | 02.06.94 | 12:13 |
| 940603.WDT | 68324 | 03.06.94 | 12:07 |
| 940604.WDT | 68200 | 04.06.94 | 9:52 |
| 940606.WDT | 68200 | 06.06.94 | 10:00 |
| 940607.WDT | 62496 | 07.06.94 | 9:50 |
| 940608.WDT | 60424 | 08.06.94 | 9:58 |
| 940609.WDT | 55800 | 09.06.94 | 9:54 |
| 940610.WDT | 55800 | 10.06.94 | 9:55 |
| 940611.WDT | 49958 | 11.06.94 | 9:51 |

Eine Hilfe kann über die Funktionstaste (F1) angezeigt werden. Eine Auswahl des Meßtages kann über die Pfeiltaste nach oben und Pfeiltaste nach unten, Bild auf und Bild ab, Pos. 1 und Ende oder durch Eingabe des Meßdatums im Format JJ.MM.TT erfolgen.

Nach Auswahl und Bestätigung durch die Enter-Taste erscheint der Inhalt der Datei, die eichpflichtigen Datensätze, auf dem EDV-Bildschirm.

| Liste 2: (Beispiel) | | | | | | | |
|---|---|---|---|---|---|---|---|
| Anzeige der eichpflichtigen Daten | | | | | | | |
| Nr. | Name | Zeit | Netto Eh. | Tara Eh. | Brutto Eh. | CRC | |
| 0001 | W08E | 14:04:09 | 66.017 kg | 13.983 kg | 80.000 kg | 6263 | OK |
| 0002 | W08E | 14:04:10 | 66.017 kg | 13.983 kg | 80.000 kg | 6A8A | OK |
| 0003 | W08E | 14:04:11 | 66.017kg | 13.983 kg | 80.000 kg | 92D2 | OK |

Durch betätigen z. B. der Enter-Taste erfolgt der Wechsel zurück zur Liste 1.

Der Eichbeamte kann nun mit Hilfe der angezeigten Datensätze feststellen, ob der z. B. auf dem Rechnungsdruck, vom Drucker 6 ausgegebenen, ausgewiesene Gewichtswert mit dem gemessenen Wert übereinstimmt.

Vergleich durch z. B. der Referenz-Nummer, des Datums, der Uhrzeit. Die Prüfzahl der installierten EP-Programme erscheint auf dem Bildschirm 5 neben der Liste 1 am rechten Bildschirmrand.

Hier wird zunächst die Kanal nummer für die installierte(n) Meßeinrichtung(en) 2 (für die Eichung nicht relevant) angezeigt und daneben die Prüfzahl der auf diesem Kanal installierten EP-Programme (wichtig für die Eichung).

Nach der eigenen Programminitialisierung wird dem Flash-Treiber der OPEN-Befehl übergeben, der bei Rückkehr den aktuellen Speicherstatus meldet. Das Sicherungsprogramm prüft anschließend das Datum des letzten und ersten Satzes im Flash-Speicher durch entsprechende READ-Befehle. Wenn die relevanten Daten vom gleichen Arbeitstag sind und noch genügend Flash-Kapazität zur Verfügung steht, beendet das Programm seine Tätigkeit.

Andernfalls werden nun alle Daten durch entsprechende READ-Befehle an den Treiber II 10 satzweise, beginnend mit Satz 1, ausgelesen und auf die Speichereinheit kopiert. Die CRC-Sicherung jedes Satzes bleibt erhalten, weil die Daten 1:1 wieder abgelegt werden. Nach erfolgreichem Abschluß des letzten READ's und Abspeichern der Daten wird der OP-Code CLEAR an den Treiber II 10 übergeben, um den gesamten Flash-Speicher für den neuen Arbeitstag zu löschen.

Nach der positiven Quittung des Flash-Treibers beendet das Sicherungsprogramm seine Tätigkeit.

Bei einem späteren Rücklesen der eichpflichtigen Daten von der Speichereinheit für die Anzeige auf dem Bildschirm 5 wird der Datensatz noch einmal mit Hilfe der CRC-Kodierung über das geheime Polynom auf Verfälschung hin überprüft und dies ggf. angezeigt.

Nach Beendigung des Sicherungsprogramms wird das eigens entwickelte Applikationsprogramm (nicht eichpflichtig) gestartet. Dieses Programm öffnet nacheinander alle eingestellten Treiber I 8 (eichpflichtige Programme, die zu Beginn beim Booten bereits geladen wurden).

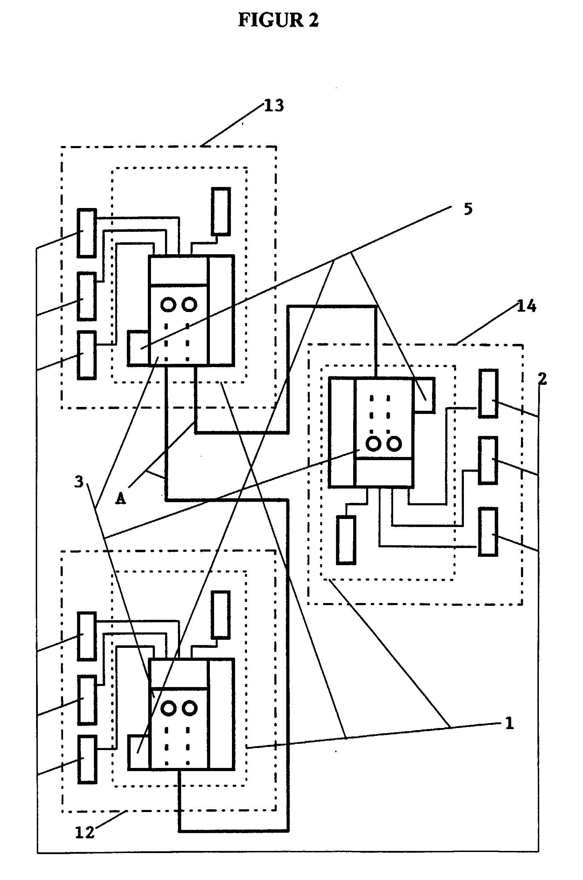

Nach Figur 2 wird die Erfindung anhand von gebildeten Rechner-Arbeitsplätzen dargestellt, wobei der Rechner-Arbeitsplatz jeweils aus der anerkannten eichfähigen Einrichtungen 1 und mindestens einer eichfähigen Meßwertdatenermittlungseinrichtung 2 besteht.

Die anerkannten eichfähigen Einrichtungen 1 bestehen entsprechend dem Ausführungsbeispiel nach Figur 1 weiterhin aus der Bedienungseinheit 4, aus dem Drucker 6 aus dem Rechner 3 mit Speichereinheit, wobei dem Rechner 3 die Schnittstelle I 7 für den Treiber I 8, die Schnittstelle II 9 für den Treiber II 10 und die EEPROM-Karte 11 zugeordnet ist.

Diese Gerätekonfiguration und die über den Rechner 3 bestehende Wirkverbindung zwischen den anerkannten eichfähigen Einrichtungen 1 ergab einen überraschenden, unerwarteten Effekt, der sich als Kreuzverbund eichfähiger Meßwertdaten darstellt.

Mittels diesem Kreuzverbund können die eichpflichtigen und/oder nicht eichpflichtigen Meßwertdaten einer eichfähigen und/oder nicht eichfähigen Meßwertdatenermittlungseinrichtung 2 von einem Rechner-Arbeitsplatz I 12 auf einem anderen Rechner-Arbeitsplatz II 13 übertragen werden.

Ohne Kreuzverbund werden am Rechner-Arbeitsplatz I 12 über die anerkannte eichfähige Einrichtung 1 die anliegenden eichpflichtigen und/oder nicht eichpflichtigen Meßwertdaten der eichfähigen und/oder nicht eichfähigen Meßwertdatenermittlungseinrichtung 2 abgefordert und über die EEPROM-Karte 11 auf den Speicher des Rechners 3 am Arbeitsplatz I 12 lokal als eichfähige Meßwertdaten abgelegt. Diese eichpflichtigen und/oder nicht eichpflichtigen Meßwertdaten können als eichfähige Meßwertdaten am Bildschirm 5 des Arbeitsplatzes I 12 angezeigt werden.

Mit dem Kreuzverbund kann man am Arbeitsplatz I 12 die Messung der am Arbeitsplatz II 13 anliegenden eichfähigen und/oder nicht eichfähigen Meßwertdaten auslösen, indem diese als eichfahige Meßwertdaten durch die am Arbeitsplatz II 13 vorhandene anerkannte eichfähige Einrichtung 1 aufgenommen und hier lokal über die dazugehörende EEPROM-Karte 11 in den Speicher des Rechners 3 abgelegt werden, wobei diese eichfähigen Meßwertdaten auf dem jeweiligen Bildschirm 5 des Arbeitsplatzes I 12 und/oder des Arbeitsplatzes II 13 angezeigt werden können.

Somit sind auch von allen weiteren Arbeitsplätzen N 14 (N ist die Nummer eines beliebigen weiteren Arbeitsplatzes) Meßwertdatenermittlungen, auch an den nicht an diesen Arbeitsplätzen angeschlossenen eichfähigen und/oder nicht eichfähigen Meßwertdatenermittlungseinrichtungen 2, auslösbar, wobei diese eichpflichtigen und/oder nicht eichpflichtigen Meßwertdaten als eichfähige Meßwertdaten lokal am jeweiligen Arbeitsplatz durch die jeweilige anerkannte eichfähige Einrichtung 1 mit Referenzen versehen über die EEPROM-Karte 11 erfaßt, gesichert und gespeichert in der Speichereinheit des jeweiligen Rechners 3 hinterlegt werden, indem diese eichfähigen Meßwertdaten sowohl lokal als auch an einem anfordernden weiteren Arbeitsplatz N 14 am jeweiligen Bildschirm 5 angezeigt werden können.

Das Verfahren ist dadurch charakterisiert,
daß eine anerkannte eichfähige Einheit 1 rückwirkungsfrei im Dialog jeder eichfähigen und/oder nicht eichfähigen Meßwertdatenermittlungseinrichtung 2 zugeordnet werden kann,
daß die eichpflichtigen und/oder nicht eichpflichtigen Meßwertdaten von der anerkannten eichfähigen Einheit 1 während der Übernahme dieser diese mittels eines Treibers I 8 und Treibers II 10 und einer EEPROM-Karte 11 mit Referenzen versieht und programmiert zuerst auf der EEPROM-Karte 11 manipulationssicher und unlöschbar als eichfähige Meßwertdaten zwischenspeichert,
daß anschließend von der EEPROM-Karte 11 die zwischengespeicherten eichfähigen Meßwertdaten auf die Speichereinheit des Rechners 3 übertragen werden,
daß die gesicherten eichfähigen Meßwertdaten zu jeder Zeit abrufbar sind,
daß diese abrufbaren eichfähigen Meßwertdaten des Archivs und die aktuell anliegenden eichpflichtigen und/oder nicht eichpflichtigen Meßwertdaten der eichfähigen und/oder nicht eichfähigen Meßwertdatenermittlungseinrichtung 2 in beliebiger Reihenfolge vom Rechner 3 abrufbar sind und auf dem Bildschirm 5 sichtbar dargestellt werden können,
daß die anerkannte eichfähige Einheit 1 mit mindestens einer eichfähigen und/oder nicht eichfähigen Meßwertermittlungseinrichtung 2 zu einem Arbeitsplatz I 12; II 13 verbunden wird,
daß die Arbeitsplätze I 12; II 13 über ihren jeweiligen Rechner (3) miteinander durch eine Leitung A in Wirkverbindung stehen,
daß den Arbeitsplätzen I 12; II 13 weitere Arbeitsplätze N 14 zugeordnet werden können,
daß von allen Arbeitsplätzen I 12; II 13; N 14 Meßwertdatenermittlungen am eigenen und an jeden anderen Arbeitsplatz auslösbar sind, wobei diese eichpflichtigen und/oder nicht eichpflichtigen Meßwertdaten als eichfähige Meßwertdaten lokal an den jeweiligen Arbeitsplatz, an dem sich die eichfähigen und/oder nicht eichfähigen Meßwertdatenermittlungseinrichtungen 2 befinden erfaßt und gesichert hinterlegt werden, indem diese eichfähigen Meßwertdaten sowohl lokal als auch am anfordernden Arbeitsplatz I 12; II 13; N 14 am jeweiligen Bildschirm 5 angezeigt werden können.

## Patentansprüche

1. Verfahren für ein eichfähiges Erfassen und Speichern von mit einer eichfähigen oder nicht eichfähigen Meßwertdatenermittlungseinrichtung (2) ermittelten Meßwertdaten, wobei eine anerkannte eichfähige Einheit (1) rückwirkungsfrei im Dialog der Einrichtung (2) zugeordnet wird, dadurch gekennzeichnet,
daß die mit der Einrichtung (2) ermittelten Meßwertdaten von der anerkannten eichfähigen Einheit (1) während der Übernahme dieser diese mittels eines Treibers I (8) und Treibers II (10) und einer EEPROM-Karte (11) mit Referenzen versieht und programmiert zuerst auf der EEPROM-Karte (11) manipulationssicher und unlöschbar als eichfähige Meßwertdaten zwischengespeichert werden,
daß anschließend von der EEPROM-Karte (11) die zwischengespeicherten eichfähigen Meßwertdaten zur Sicherung auf die Speichereinheit eines Rechners (3) übertragen werden,
daß die gesicherten eichfähigen Meßwertdaten zu jeder Zeit abrufbar sind,
daß die aus der Speichereinheit des Rechners (3) abrufbaren eichfähigen Meßwertdaten und die aktuell anliegenden ermittelten Meßwertdaten der Einrichtung (2) in beliebiger Reihenfolge vom Rechner (3) abrufbar sind und auf dem Bildschirm (5) als eichfähige Meßwertdaten sichtbar dargestellt werden können.

2. Verfahren nach Anspruch 1, dadurch gekennzeichnet,
daß die anerkannte eichfähige Einheit (1) mit mindestens einer Einrichtung (2) zu einem Arbeitsplatz I (12); II (13) verbunden wird.

3. Verfahren nach Anspruch 2, dadurch gekennzeichnet,
daß Arbeitsplätze I (12); II (13) über ihren jeweiligen Rechner (3) miteinander durch eine Leitung (A) in Wirkverbindung stehen.

4. Verfahren nach Anspruch 3, dadurch gekennzeichnet,
daß den Arbeitsplätzen I (12); II (13) beliebig viele Arbeitsplätze N (14) zugeordnet, werden können.

5. Verfahren nach Anspruch 3 oder 4, dadurch gekennzeichnet,
daß von allen Arbeitsplätzen I (12); II (13); N (14) Meßwertdatenermittlungen am eigenen und an jeden anderen Arbeitsplatz auslösbar sind, wobei diese ermittelten Meßwertdaten als eichfähige Meßwertdaten lokal an den jeweiligen Arbeitsplatz, an dem sich die Einrichtung (2) befinden, erfaßt und gesichert als eichfähige Meßwertdaten hinterlegt werden, indem diese sowohl lokal als auch am anfordernden Arbeitsplatz I (12); II (13); N (14) am jeweiligen Bildschirm (5) angezeigt werden können.

6. Vorrichtung für ein eichfähiges Erfassen und Speichern von mit einer Einrichtung (2) ermittelten Daten, wobei eine anerkannte eichfähige Einheit (1) rückwirkungsfrei im Dialog der Einrichtung (2) zugeordnet ist, gekennzeichnet durch ein Programm in der Weise,
daß die anerkannte eichfähige Einheit (1) die Meßwertdaten übernimmt, sie mittels eines Treibers I (8) und eines Treibers II (10) und einer EEPROM-Karte (11) mit Referenzen versieht und programmiert zuerst auf der EEPROM-Karte (11) manipulationssicher und nicht flüchtig als eichfähige Meßwertdaten zur Sicherung zwischengespeichert ablegt und anschließend der Speichereinheit des Rechners (3) zuführt, wobei diese eichfähigen Meßwertdaten jederzeit verfügbar sind und diese, sowie die aktuell anliegenden Meßwertdaten der angeschlossenen Einrichtung (2) in beliebiger Reihenfolge vom Rechner (3) als eichfähige Meßwertdaten abrufbar sind und auf dem Bildschirm (5) als eichfähige Meßwertdaten sichtbar erscheinen können.

7. Vorrichtung nach Anspruch 6, dadurch gekennzeichnet,
daß die anerkannte eichfähige Einheit (1) mit mindestens einer Einrichtung (2) einen Arbeitsplatz I (12); II 8 (13) darstellt.

8. Vorrichtung nach Anspruch 7, dadurch gekennzeichnet,
daß Arbeitsplätze I 8 (12); II (13) über ihren jeweiligen Rechner (3) miteinander z. B. durch eine Leitung (A) in Wirkverbindung stehen.

9. Vorrichtung nach Anspruch 8, dadurch gekennzeichnet,
daß die Arbeitsplätze I (12); II (13) und weitere Arbeitsplätze N (14) zuordenbar sind.

10. Vorrichtung nach Anspruch 8 oder 9, dadurch gekennzeichnet,
daß von allen Arbeitsplätzen I (12); II (13); N (14) Meßwertdatenermittlungen am eigenen und an jeden anderen Arbeitsplatz auslösbar sind, wobei diese Meßwertdaten als eichfähige Meßwertdaten lokal an den jeweiligen Arbeitsplatz, an dem sich die Einrichtung (2) befinden, erfaßt und gesichert hinterlegt werden, indem diese eichfähigen Meßwertdaten sowohl lokal als auch am anfordernden Arbeitsplatz I (12); II (13); N (14) am jeweiligen Bildschirm (5) angezeigt werden können.

11. Vorrichtung nach einem der Ansprüchs 6 bis 10, dadurch gekennzeichnet,
daß aus dem Applikationsprogramm Meßwertdaten interaktiv abrufbar und zur Abrechnung, Buchung, (Fern-) Übertragung, Weiterverarbeitung, Archivierung, Auswertung und zum Drucken zu verwenden sind, wobei die Applikation selber mit dem zuvor genannten Funktionsumfang nicht mehr eichfähig zu sein braucht, indem die eindeutige Zuordnung zu den eichfähigen Meßdaten erhalten bleibt.

12. Vorrichtung nach einem der Ansprüchs 6 bis 11, dadurch gekennzeichnet,
daß die Meßdaten gleichzeitig bzw. zusätzlich auf dem Bildschirm (5) bzw. auf dem Bildschirm auf einem zusätzlichen Fenster anzeigbar sind.

13. Vorrichtung nach einem der Ansprüchs 6 bis 12, dadurch gekennzeichnet,
daß die Meßdaten online in einem separaten Fenster auf dem Bildschirm (5) als Zusatzanzeige bzw. als Hauptanzeige für zusätzliche Meßgeräte anzeigbar sind.

## Claims

1. Procedure for capture and storage of measured value data capable of being standardised by means of a measured value data determination facility (2), which may or may not be standardised in such a manner that a recognised reference unit (1) is allocated in non-interacting dialogue to the facility (2), characterised by the fact
that the measured value data determined using the facility (2) is provided with references and is programmed by the recognised reference unit (1) during the transfer of the latter by means of a driver I (8) and driver II (10) and an EEPROM card (11) and is initially buffered as standardised measured value data on the EEPROM card (11) in such a way that it cannot be manipulated or deleted,
that the buffered standardised measured value data is then transferred from the EEPROM card (11) to be saved on the memory unit of the PC (3)
that the saved standardised measured value data can be called up at any time,
that the standardised measured value data which can be called up from the memory unit of the PC (3) and the current measured value data determined by the facility (2) can be called up from the PC (3) in an arbitrary order and displayed as standardised measured value data on the monitor (5).

2. Procedure in accordance with Claim 1, characterised by the fact that
the recognised standardised unit (1) is linked via at least one facility (2) to a workstation I (12); II (13).

3. Procedure in accordance with Claim 2, characterised by the fact that
the workstations I (12); II (13) are in operative connection with one another via a line (A).

4. Procedure in accordance with Claim 3, characterised by the fact that
the workstations I (12); II (13) can be allocated any number of workstations required N (14).

5. Procedure in accordance with Claim 3 or Claim 4, characterised by the fact that
determination of the measured value data can be triggered on the user's own or any other workstation from all workstations I (12); II (13); N (14), whereby the measured value data determined is captured and saved locally as standardised measured value data on the workstation on which the facility (2) is located and can be displayed both locally and on the requesting workstation I (12); II (13); N (14) on the respective monitor (5).

6. Device for the standardised capture and storage of data determined using a facility (2), whereby a recognised reference unit (1) is allocated to the facility (2) in a non-interacting dialogue, characterised by being programmed in a manner that
the recognised reference unit (1) accepts the measured value data and provides it with references and programmes it by means of a driver 1 (8) and a driver II (10) and an EEPROM card (11), buffers it initially as standardised measured value data on the EEPROM card (11) in such a way that it cannot be manipulated and is non-volatile and subsequently transports it to the memory unit of the PC (3) in such a manner that this standardised measured value data is available and both this and the measured value data currently available on the connected facility (2) can be called up in an arbitrary order as standardised measured value data from the PC (3) and can be displayed as standardised measured value data on the monitor (5).

7. Device in accordance with Claim 6, characterised by the fact that
the recognised standardised unit (1) represents a workstation I (12); II 8 (13) with at least one facility (2).

8. Device in accordance with Claim 7, characterised by the fact that
workstations 1 8 (12); II (13) are in operative connection with one another via their respective PC (3) e.g. by means of a line (A).

9. Device in accordance with Claim 8, characterised by the fact that
the workstations I (12); II (13) and further workstations N (14) can be allocated.

10. Device in accordance with Claim 8 or Claim 9, characterised by the fact that measured value data determination can be triggered on the user's own or on any other workstation from all workstations I (12); II (13); N (14), whereby this measured value data is captured and saved locally as standardised measured value data on the workstation where the facility (2) is located, and it is possible to display this standardised measured value data both locally and on the relevant monitor (5) of the requesting workstation I (12); II (13); N (14).

11. Device in accordance with one of the Claims from Claims 6 to Claim 10, characterised by the fact that
measured value data can be called up interactively from the application program and used for accounting, booking entries, (remote) transfer, reprocessing, archiving, evaluation and printing, whereby the application itself with the aforementioned functional range no longer needs to be standardised by maintaining its clear allocation as standardised measured data.

12. Device in accordance with one of the Claims from Claim 6 to Claim 11, characterised by the fact that
the measured data can be displayed simultaneously or additionally on the monitor (5) or in an additional window on the monitor.

13. Device in accordance with one of the Claims from Claim 6 to Claim 12, characterised by the fact that
the measured data can be displayed on-line in a separate window on the monitor (5) as an additional display or as the main display for additional measuring devices.

## Revendications

1. Procédé de saisie et de mémorisation étalonnables de données de valeurs de mesure déterminées à l'aide d'une installation de détermination de données de valeurs de mesure (2) étalonnable ou non étalonnable, une unité étalonnable reconnue (1) étant associée sans répercussions dans le dialogue de l'installation (2), **caractérisé par le fait que**
les données de valeurs de mesure déterminées à l'aide de l'installation (2) sont pourvues de références par l'unité étalonnable reconnue (1) pendant leur prise en charge par celle-ci au moyen d'un programme de gestion I (8) et d'un programme de gestion II (10) et d'une carte EEPROM (11) et, après avoir été programmées, sont mémorisées temporairement d'abord sur la carte EEPROM (11) en tant que données de valeurs de mesure étalonnables de façon à ne pas pouvoir être effacées et en étant protégées contre des manipulations,
pour finir, les données de valeurs de mesure étalonnables mémorisées temporairement sont transférées par mesure de sécurité de la carte EEPROM (11) à l'unité de mémoire d'un calculateur (3),
les données de valeurs de mesure étalonnables sauvegardées sont susceptibles d'être appelées à tout moment,
les données de valeur de mesure étalonnables susceptibles d'être appelées à partir de l'unité de mémoire du calculateur (3) et les données de valeurs de mesure de l'installation (2) déterminées rentrant en ligne de compte sont susceptibles d'être appelées par le calculateur (3) dans l'ordre de son choix et peuvent être représentées sur l'écran (5) de façon visible en tant que données de valeurs de mesure étalonnables.

2. Procédé selon la revendication 1, **caractérisé par le fait que**
l'unité étalonnable reconnue (1) est reliée à au moins une installation (2) menant à un poste de travail I (12) ; II (13).

3. Procédé selon la revendication 2, **caractérisé par le fait que**
des postes de travail I (12) ; II (13) sont reliés activement les uns aux autres par une conduite (4) par l'intermédiaire de leur calculateur respectif (3).

4. Procédé selon la revendication 3, **caractérisé par le fait que**
beaucoup de postes de travail N (14) peuvent être associés au choix aux postes de travail I (12) ; II (13).

5. Procédé selon la revendication 3 ou 4, **caractérisé par le fait que**
des déterminations de données de valeurs de mesure sont susceptibles d'être déclenchées par tous les postes de travail I (12) ; II (13) ; N (14) au propre poste de travail ainsi qu'à chaque autre poste, ces données de valeurs de mesure déterminées étant saisies en tant que données de valeurs de mesure étalonnables localement au poste de travail respectif auquel se trouve l'installation (2) et étant rangées en tant que données de valeurs de mesure étalonnables, après avoir été sauvegardées, en pouvant les afficher sur l'écran respectif (5) aussi bien localement qu'au poste de travail l'exigeant I (12); II (13) ; N (14).

6. Dispositif de saisie et de mémorisation étalonnables de données déterminées à l'aide d'une installation (2), une unité étalonnable reconnue (1) étant associée sans répercussions dans le dialogue de l'installation (2), **caractérisé par** un programme tel que
l'unité étalonnable reconnue (1) prend en charge les données de valeurs de mesure, les pourvoit de références au moyen d'un programme de gestion I (8) et d'un programme de gestion II (10) et d'une carte EEPROM (11) et, après les avoir programmées, les range mémorisées temporairement en tant que données de valeurs de mesure étalonnables d'abord dans la carte EEPROM (11) par mesure de sécurité de façon non-volatile et à les protéger contre des manipulations et les amène pour finir à l'unité de mémoire du calculateur (3), ces données de valeurs de mesure étalonnables étant disponibles à tout moment et ces dernières ainsi que les données de valeurs de mesure rentrant en ligne de compte de l'installation connectée (2) étant susceptibles d'être appelées en tant que données de valeurs de mesure étalonnables par le calculateur (3) dans l'ordre de son choix et pouvant apparaître de façon visible sur l'écran (5) en tant que données de valeurs de mesure étalonnables.

7. Dispositif selon la revendication 6, **caractérisé par le fait que**
l'unité étalonnable reconnue (1) munie d'au moins une installation (2) représente un poste de travail I (12) ; II 8 (13).

8. Dispositif selon la revendication 7, **caractérisé par le fait que**
des postes de travail I 8 (12) ; II (13) sont reliés activement les uns aux autres p. ex. par une conduite (4) par l'intermédiaire de leur calculateur respectif (3).

9. Dispositif selon la revendication 8, **caractérisé par le fait que**
les postes de travail I (12) ; II (13) et d'autres postes de travail N (14) sont susceptibles d'être associés.

10. Dispositif selon la revendication 8 ou 9, **caractérisé par le fait que**
des déterminations de données de valeurs de mesure sont susceptibles d'être déclenchées par tous les postes de travail I (12) ; II (13) ; N ( 14) au propre poste de travail ou à chaque autre poste de travail, ces données de valeurs de mesure étant rangées après avoir été saisies et sauvegardées en tant que données de valeur de mesure étalonnables localement au poste de travail respectif auquel se trouve l'installation (2) en pouvant afficher ces données de valeurs de mesure étalonnables sur l'écran respectif (5) aussi bien localement qu'au poste de travail l'exigeant I (12) ; II (13) ; N (14).

11. Dispositif selon l'une des revendications 6 à 10, **caractérisé par le fait que**
des données de valeurs de mesure sont susceptibles d'être appelées de façon interactive à partir du programme d'application et sont à utiliser pour le décompte, la comptabilisation, la (télé)transmission, le traitement ultérieur, l'archivage, l'exploitation et l'impression, l'application elle-même avec l'étendue des fonctions nommée ci-avant n'ayant plus besoin d'être étalonnable par le fait que la classification claire en données de valeurs de mesure est conservée.

12. Dispositif selon l'une des revendications 6 à 11, **caractérisé par le fait que**
les données de valeurs de mesure sont susceptibles d'être affichées simultanément ou bien en plus sur l'écran (5) ou bien à l'écran dans une fenêtre supplémentaire.

13. Dispositif selon l'une des revendications 6 à 12, **caractérisé par le fait que**
les données de mesure sont susceptibles d'être affichées en ligne dans une fenêtre séparée sur l'écran (5) en tant qu'affichage supplémentaire ou bien en tant qu'affichage principal d'appareils de mesure supplémentaires.
